(19) Europäisches Patentamt / European Patent Office / Office européen des brevets

(11) **EP 1 888 476 B1**

(12) **FASCICULE DE BREVET EUROPEEN**

(45) Date de publication et mention
de la délivrance du brevet:
**12.12.2018 Bulletin 2018/50**

(21) Numéro de dépôt: **06763114.3**

(22) Date de dépôt: **10.05.2006**

(51) Int Cl.:
***C03C 17/36*** (2006.01)

(86) Numéro de dépôt international:
**PCT/EP2006/062204**

(87) Numéro de publication internationale:
**WO 2006/122900 (23.11.2006 Gazette 2006/47)**

(54) **EMPILAGE ANTI-SOLAIRE**

SONNENSCHUTZSTAPEL

MULTILAYER STACK FOR SOLAR PROTECTION

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **11.05.2005 EP 05103917**

(43) Date de publication de la demande:
**20.02.2008 Bulletin 2008/08**

(73) Titulaire: **AGC Glass Europe**
**1348 Louvain-la-Neuve (BE)**

(72) Inventeurs:
• **ROQUINY, Philippe**
**B-6040 Jumet (BE)**
• **HECQ, André**
**B-6040 Jumet (BE)**

(74) Mandataire: **Bayot, Daisy et al**
**AGC Glass Europe**
**Technovation Centre**
**IP Department**
**Rue Louis Blériot, 12**
**6041 Gosselies (BE)**

(56) Documents cités:
EP-A- 1 498 397      WO-A-02/48065
WO-A-03/106363      WO-A-2006/017607
FR-A- 2 708 262      FR-A- 2 717 171
US-A- 5 279 722      US-A1- 2002 045 037
US-A1- 2002 102 394      US-A1- 2002 136 905
US-A1- 2003 143 401      US-B1- 6 210 784
US-B1- 6 605 358

• CHIBA K ET AL: "Low-emissivity coating of amorphous diamond-like carbon/Ag-alloy multilayer on glass" APPLIED SURFACE SCIENCE, ELSEVIER, AMSTERDAM, NL, vol. 246, no. 1-3, 8 décembre 2004 (2004-12-08), pages 48-51, XP004872626 ISSN: 0169-4332

## Description

La présente invention se rapporte à une feuille de verre portant un empilage anti-solaire multicouche, ainsi qu'à un vitrage multiple incorporant une telle feuille de verre.

Les empilages anti-solaires auxquels se rapporte la présente invention comprennent au moins une couche fonctionnelle à base d'un matériau réfléchissant le rayonnement infrarouge et au moins deux revêtements diélectriques dont l'un est le premier revêtement diélectrique déposé directement sur la feuille de matière vitreuse et l'autre est externe par rapport à la ou aux couches fonctionnelles, chaque couche fonctionnelle étant entourée de revêtements diélectriques. Ces différentes couches sont, par exemple, déposées par pulvérisation cathodique sous pression réduite assistée par champ magnétique, dans un dispositif bien connu de type magnétron.

Ces empilages anti-solaires sont utilisés dans la réalisation de vitrages de protection solaire afin de réduire le risque de surchauffe excessive, par exemple d'un espace clos ayant de grandes surfaces vitrées, dû à l'ensoleillement et ainsi réduire l'effort de climatisation à consentir en été. Dans ce cas, le vitrage doit laisser passer le moins possible de rayonnement solaire énergétique total, c'est-à-dire qu'il doit présenter un facteur solaire (FS ou g) le plus faible possible. Il est cependant fortement souhaitable qu'il garantisse un certain niveau de transmission lumineuse (TL) de manière à procurer un niveau d'éclairement suffisant à l'intérieur du bâtiment. Ces exigences quelque peu conflictuelles traduisent la volonté d'obtenir un vitrage présentant une sélectivité (S) élevée, définie par le rapport de la transmission lumineuse au facteur solaire. Ces empilages anti-solaires présentent également une faible émissivité qui permet de réduire la déperdition de chaleur par rayonnement infrarouge de grande longueur d'onde. Ils améliorent ainsi l'isolation thermique des grandes surfaces vitrées et réduisent les déperditions d'énergie et les coûts de chauffage en période froide.

La transmission lumineuse (TL) est le pourcentage du flux lumineux incident, de l'Illuminant D65, transmis par le vitrage. Le facteur solaire (FS ou g) est le pourcentage du rayonnement énergétique incident qui est d'une part directement transmis par le vitrage et d'autre part absorbé par celui-ci puis rayonné dans la direction opposée à la source d'énergie par rapport au vitrage.

Ces vitrages anti-solaires sont en général assemblés en vitrages doubles dans lesquels la feuille de verre portant l'empilage est associée à une autre feuille de verre, dépourvue ou non de revêtement, l'empilage multicouche se trouvant à l'intérieur de l'espace entre les deux feuilles de verre.

Dans certain cas, on est souvent amené à effectuer une opération de renforcement mécanique du vitrage, telle qu'une trempe thermique de la ou des feuilles de verre, pour améliorer sa résistance aux contraintes mécaniques. Dans les processus de fabrication et de mise en forme des vitrages, il y a certains avantages à effectuer ces opérations de trempe sur le substrat déjà revêtu au lieu de revêtir un substrat déjà traité. Ces opérations sont réalisées à une température relativement élevée, température à laquelle la couche réfléchissant l'infrarouge, par exemple à base d'argent, à tendance à se détériorer et à perdre ses propriétés optiques et ses propriétés vis-à-vis du rayonnement infrarouge. Dans le cas où la feuille de verre revêtue doit subir un traitement thermique, il faut donc prendre des précautions toutes particulières pour réaliser une structure d'empilage qui soit apte à subir un traitement thermique de trempe ou de bombage, souvent référencé ci-après par l'expression « trempable », sans perdre ses propriétés optiques et/ou énergétiques qui en font sa raison d'être.

Il est également souhaitable que les vitrages répondent à certains critères esthétiques en terme de réflexion lumineuse (RL), c'est-à-dire le pourcentage du flux lumineux incident -de l'Illuminant D65- réfléchi par le vitrage, et de couleur en réflexion et en transmission. La demande du marché est un vitrage à faible réflexion lumineuse. La combinaison d'une haute sélectivité avec une faible réflexion lumineuse conduit parfois à l'obtention de teintes pourpres en réflexion qui sont très peu esthétiques.

Pour réduire la quantité de chaleur qui pénètre dans le local au travers du vitrage, on empêche le rayonnement calorifique infrarouge invisible de traverser le vitrage en le réfléchissant. C'est le rôle de la ou des couches fonctionnelles à base d'un matériau réfléchissant le rayonnement infrarouge. C'est un élément essentiel dans l'empilage anti-solaire. Toutefois, une partie importante du rayonnement calorifique est également transmise par le rayonnement visible. Pour réduire la transmission de cette partie du rayonnement calorifique et aller au-delà de l'élimination de l'apport d'énergie par le rayonnement infrarouge, on est obligé d'abaisser le niveau de la transmission lumineuse.

La solution proposée par la demande de brevet WO 02/48065A1 consiste à insérer une couche absorbante, par exemple TiN, dans l'empilage et d'enfermer cette couche entre deux couches en matériau diélectrique transparent. Ainsi, explique ce document, la couche absorbante n'est ni en contact avec le verre, ce qui limite les problèmes de diffusion de l'oxygène et d'alcalin provenant du verre, notamment sous l'effet de la chaleur lorsque le verre doit être traité thermiquement, ni en contact direct avec l'argent, ce qui limite les problèmes de détérioration de la couche d'argent induite par l'oxydation de la couche absorbante à son contact, notamment sous l'effet de la chaleur.

Un des problèmes se déduit directement de ce qui vient d'être dit, c'est que la couche absorbante s'oxyde dans certaines conditions, notamment lors du traitement thermique, et devient plus transparente, perdant ainsi une partie de sa raison d'être dans l'empilage. De plus, le niveau d'oxydation de la couche absorbante va dépendre des conditions du traitement thermique, ce qui veut dire qu'il sera difficile de fixer les propriétés de l'empilage après trempe.

Pour atténuer cet effet, le document cité ci-dessus propose d'enfermer la couche absorbante entre deux couches de nitrure de silicium ou de nitrure d'aluminium.

Outre que le résultat n'est pas totalement satisfaisant, la solution proposée par ce document a le désavantage de compliquer encore un peu plus les structures d'empilage qui sont déjà complexes par nature. Cette solution peut notamment nécessiter l'utilisation d'une zone de dépôt spécifique, avec atmosphère adaptée, en plein milieu d'un diélectrique donné pour déposer la couche absorbante. Un autre inconvénient de la solution proposée par ce document WO'065 est la difficulté de neutraliser la teinte apportée par la couche absorbante introduite au milieu d'un diélectrique.

L'invention se rapporte à une feuille de verre portant un empilage anti-solaire multicouche selon la revendication 1.

Par « matière absorbante » on entend une matière qui absorbe une partie du rayonnement visible, et dont l'indice d'absorption spectrale $k(\lambda)$ est supérieur à 1,9 en moyenne, cette moyenne étant calculée à partir de trois points du spectre visible situés à 380, 580 et 780 nm. Des valeurs d'indice d'absorption spectrale sont données dans « Handbook of Chemistry and Physics », 70e Edition, CRC Press, 1989-1990, E389-E404.

La matière absorbante utilisée dans l'invention est essentiellement sous forme métallique. Elle peut aussi éventuellement être dopée pour différentes raisons, notamment pour des facilités de dépôt dans un dispositif magnétron ou des facilités d'usinage des cibles, par un élément non repris dans la liste, tels que, par exemple, l'aluminium et le bore.

On sait que le silicium doit, à proprement parler, être classé comme semi-métal, mais comme le silicium se comporte à différents égards comme certains métaux, pour des raisons de facilité on l'a inclus, dans la présente invention, sous le vocable « matière absorbante essentiellement métallique ».

L'expression « proximité immédiate » signifie que la matière absorbante fait partie d'une couche disposée en contact direct avec la couche fonctionnelle ou éventuellement séparée de celle-ci par une très mince couche de métal sacrificiel avide d'oxygène ou de sous-oxyde métallique. Etant donné que la matière absorbante se trouve à proximité immédiate de la couche fonctionnelle ou incluse dans cette couche fonctionnelle, elle peut ainsi avoir un effet favorable sur la réflexion du rayonnement infrarouge et elle bénéficie en plus des mesures de protection contre l'oxydation destinées au matériau réfléchissant le rayonnement infrarouge.

L'invention se rapporte spécifiquement aux empilages qui, lorsqu'ils sont déposés sur une feuille de verre float clair sodo-calcique ordinaire de 6 mm d'épaisseur, présentent un facteur solaire FS inférieur à 45%, en particulier de 20 à 45%, et une transmission lumineuse TL inférieure à 70%, en particulier de 30 à 70%. De préférence, ils présentent, dans ces conditions, un facteur solaire FS compris entre 25 à 40%, et une transmission lumineuse TL comprise entre 35 et 68%.

On a trouvé qu'en réalisant un empilage selon l'invention on pouvait, de manière surprenante, fixer aisément le niveau d'absorption de l'empilage et que ce niveau est valablement conservé même dans des conditions particulièrement rudes, tel qu'un traitement thermique de l'empilage par exemple, et ceci tout en obtenant l'aspect optique et esthétique désiré, par exemple un aspect neutre en réflexion.

Les matières absorbantes choisies jouent un rôle primordial dans l'obtention de ce résultat. Certaines au moins de ces matières, en particulier le palladium et le platine, étaient déjà connues, notamment par le document EP543077A1, pour leur effet d'amélioration de la résistance de l'empilage à l'humidité et aux attaques chimiques, soit en alliage avec la couche réfléchissant l'infrarouge, particulièrement l'argent, soit en couche distincte sur l'argent, soit en alliage avec la couche de métal sacrificiel déposée sur l'argent. Toutefois, il s'agissait d'obtenir un empilage ayant une transmission lumineuse la plus élevée possible. L'utilisation de ces matières pour ajuster le niveau d'absorption thermique dans le rayonnement visible est tout à fait nouveau et différent de l'enseignement établi jusqu'à présent. De plus, ce sont des matières relativement onéreuses qu'il est surprenant d'utiliser en tant que matière absorbante dans une production en série. Nous avons découvert que, de manière surprenante, l'invention apporte des avantages vraiment significatifs en matière d'ajustement du facteur solaire pour des vitrages à faible facteur solaire, inférieur à 45% en vitrage simple, et à sélectivité élevée. En outre, les matières absorbantes choisies peuvent participer de manière marginale à la réflexion du rayonnement infrarouge.

Les revêtements diélectriques sont bien connus dans le domaine des couches déposées par pulvérisation cathodique. Les matières adéquates sont nombreuses et il n'est pas utile d'en faire la liste ici. Ce sont en générale des oxydes, oxy-nitrures ou nitrures métalliques. Parmi les plus courantes, on peut citer à titre d'exemple $TiO_2$, $SnO_2$, ZnO, $Si_3N_4$, AlN, $Al_2O_3$, $ZrO_2$, $Nb_2O_5$ et $Bi_2O_3$. En ce qui concerne le revêtement externe, $SnO_2$ est une matière diélectrique qui convient particulièrement bien lorsque l'empilage ne doit pas subir de traitement thermique à haute température.

Le revêtement diélectrique externe de l'empilage inclut au moins une couche à base d'un oxyde mixte zinc-étain contenant au moins 20% d'étain et peut inclure une couche-barrière à la diffusion de l'oxygène de plus de 5 nm d'épaisseur choisie parmi les matériaux suivants : AlN, AlNxOy, $Si_3N_4$, SiOxNy, $SiO_2$, ZrN, SiC, SiOxCy, TaC, TiN, TiNxOy, TiC, CrC, DLC et leurs alliages, et des nitrures ou oxy-nitrures d'alliages tels que SiAlOxNy ou SiTixNy. Le diélectrique externe ainsi défini favorise la stabilité de la matière absorbante, notamment lorsque l'empilage est soumis à différentes agressions chimiques et thermiques externes et notamment lors d'un traitement thermique à haute température de type bombage et/ou trempe.

Le sigle « DLC » est l'abréviation de l'expression anglaise bien connue « Diamond Like Carbon » qui se rapporte à une couche à base de carbone présentant des liaisons tétraédriques similaires au diamant.

Selon l'invention, la matière absorbante fait de préférence au moins partiellement partie d'une couche distincte de la couche fonctionnelle déposée sous ou sur elle et en contact direct avec celle-ci. Avec cette disposition, le risque d'affaiblissement des propriétés de réflexion du rayonnement infrarouge de la couche fonctionnelle est réduit, notamment dans le cas d'une forte proportion de matière absorbante.

Selon une première forme préférée de réalisation de l'invention, la matière absorbante est de préférence mélangée, en tant que dopant ou en tant qu'alliage, à une couche de métal sacrificiel destiné à protéger la couche fonctionnelle des agressions chimiques et en particulier de l'oxydation, par exemple une couche de titane contenant environ 5 % atomique de palladium. De nouveau, cette couche peut être obtenue soit à partir d'une cathode d'un alliage du métal sacrificiel avec la matière absorbante, soit par co-pulvérisation à partir de deux cathodes distinctes. La couche de métal sacrificiel contient de préférence de 5 à 20% de matière absorbante.

Selon une seconde forme préférée de réalisation de l'invention, la matière absorbante constitue, de préférence, la majeure part de la couche distincte déposée sous ou sur, et en contact direct avec, la couche fonctionnelle. La couche fonctionnelle peut ainsi être déposée directement sur la couche absorbante ou la couche absorbante peut être déposée directement sur la couche fonctionnelle. On a trouvé que cette disposition était bénéfique tant du point de vue des propriétés conférées à l'empilage que de la facilité de mise en oeuvre industrielle. En effet, la matière absorbante déposée sous forme métallique est facilement intégrée dans la zone de dépôt de type essentiellement métallique de la couche fonctionnelle sans complication du procédé de dépôt. D'autre part, il est aisé de trouver dans les matières absorbantes citées dans le cadre de l'invention les matières compatibles avec le matériau réfléchissant le rayonnement infrarouge utilisé, à base d'argent.

On a trouvé par exemple que l'alliage CoCr, sous forme d'une couche absorbante distincte déposée sur la couche fonctionnelle, permet d'obtenir aisément un empilage anti-solaire non-trempable à faible facteur solaire ayant un aspect esthétique général, notamment un aspect gris-bleuté en transmission et en réflexion, particulièrement agréable et correspondant à la demande du marché.

De préférence, selon la seconde forme préférée de l'invention, la matière absorbante est choisie parmi Pd, Pt, Au, Ir, Rh, Ru, Os, Co, La, Pr, Nd et leurs alliages, et le revêtement diélectrique externe de l'empilage inclut au moins une couche à base d'un oxyde mixte zinc-étain contenant au moins 20% d'étain et/ou une couche-barrière à la diffusion de l'oxygène de plus de 5 nm d'épaisseur choisie parmi les matériaux suivants : AlN, AlNxOy, $Si_3N_4$, SiOxNy, $SiO_2$, ZrN, SiC, SiOxCy, TaC, TiN, TiNxOy,TiC, CrC, DLC et leurs alliages, et des nitrures ou oxy-nitrures d'alliages tels que SiAlOxNy ou SiTixNy. La combinaison de ces matières absorbantes avec un revêtement diélectrique externe ainsi défini facilite la fixation du niveau d'absorption désiré de l'empilage anti-solaire après traitement thermique à haute température.

De préférence, cette couche distincte de matière absorbante a une épaisseur physique comprise entre 0,3 et 10 nm, avantageusement comprise entre 0,4 et 5 nm, et idéalement comprise entre 0,8 et 3 nm. Ces gammes d'épaisseurs permettent d'obtenir des vitrages anti-solaires à faible facteur solaire et à haute sélectivité avec un aspect esthétique correspondant à la demande du marché.

Avantageusement, la matière absorbante est choisie parmi au moins l'un des éléments suivants ; Pt, Pd, Co, Ir, Ru, Rh, Os, CoCr, et leurs alliages. Ces matières absorbantes permettent de réaliser un empilage anti-solaire efficace et d'aspect esthétique correspondant à la demande, particulièrement lorsqu'elles sont disposées en couches distinctes de la couche fonctionnelle. CoCr est plus particulièrement destiné à un empilage qui ne doit pas subir de traitement thermique à haute température.

De préférence, selon n'importe laquelle des formes de réalisation de l'invention, la matière absorbante est du palladium. Cette association avec une couche fonctionnelle à base d'argent, dans le cadre de l'invention, permet d'obtenir un empilage anti-solaire sélectif ayant une bonne résistance à la corrosion et qui conserve aisément ses propriétés absorbantes.

De préférence, 4 à 35%, avantageusement 8 à 22%, de l'absorption lumineuse de l'empilage sont imputables à la matière absorbante. On obtient ainsi un facteur solaire adéquat pour un produit correspondant à la demande du marché.

De préférence, le premier revêtement diélectrique et le revêtement diélectrique externe comprennent au moins une couche à base d'un oxyde mixte zinc-étain contenant au moins 20% d'étain. On a constaté que cette structure renforce la résistance de l'empilage au traitement thermique.

Avantageusement, l'empilage comprend dans l'ordre au moins la succession suivante de couches à partir de la feuille de matière vitreuse :

    a) un premier revêtement diélectrique,
    b) une couche fonctionnelle à base d'argent,
    c) une couche absorbante,
    d) de manière optionnelle, une ou deux couches de métal sacrificiel, éventuellement sous-oxydé, choisi parmi un ou plusieurs des matériaux suivants : Ti, Ni, Cr, Nb, Zn, Zr, Al, Ta et leurs alliages,

e) un revêtement diélectrique externe.

On a constaté que cette succession spécifique de couches favorise la conservation des propriétés d'absorption de l'empilage, notamment lors d'un traitement thermique.

La couche optionnelle de métal sacrificiel peut être formée d'une double couche tel que par exemple NiCr/Ti. Une telle double couche fait l'objet de la demande de brevet WO 03/106363 A2, déposée au nom de la demanderesse et publiée le 24 décembre 2003, dont le contenu est incorporé ici par référence.

Pour obtenir un empilage anti-solaire sélectif à haute performance, il comprend avantageusement au moins deux couches fonctionnelles séparées par au moins un revêtement diélectrique intermédiaire.

De préférence, la matière absorbante est disposée à proximité immédiate de, ou incluse dans, la couche fonctionnelle la plus éloignée de la feuille de matière vitreuse, et la teinte n'est pas significativement modifiée lorsqu'une matière absorbante est remplacée par une autre matière absorbante apportant le même niveau d'absorption. La disposition spécifique de la couche absorbante, en particulier lorsqu'elle est située au-dessus de la seconde couche fonctionnelle ou incluse dans la couche fonctionnelle, combinée avec une structure judicieuse de diélectrique, permet d'obtenir un empilage peu dépendant de l'élément constituant la matière absorbante. On peut dès lors opter plus aisément pour une matière plus facile à déposer par pulvérisation cathodique ou pour une matière moins onéreuse, sans qu'un observateur averti ne puisse raisonnablement détecter un changement de teinte par une observation visuel et sans que le facteur solaire ne soit modifié de plus d'un pour-cent. Par exemple, dans ce cas, lorsque l'empilage ne doit pas subir de traitement thermique, le palladium peut être remplacé par du titane ou par du NiCr sans changement significatif de la teinte de l'empilage. Il est toutefois bien sûr nécessaire d'adapter l'épaisseur de la couche absorbante, ou le pourcentage de matière absorbante dans l'alliage de la matière absorbante avec la couche fonctionnelle ou la couche sacrificielle, selon la nature de la matière absorbante pour obtenir le même niveau d'absorption. La substitution d'une matière absorbante par une autre matière absorbante, par exemple pour des raisons de modification des coûts ou des contraintes de production ou autres, est facilitée car il suffit d'adapter l'épaisseur au niveau d'absorption et on retrouve directement la teinte correcte de l'empilage.

De préférence, l'empilage comprend dans l'ordre au moins la succession suivante de couches à partir de la feuille de matière vitreuse :

a) un premier revêtement diélectrique,

b) une première couche fonctionnelle à base d'argent,

c) une ou deux couches de métal sacrificiel, éventuellement sous-oxydé, choisi parmi un ou plusieurs des matériaux suivants : Ti, Ni, Cr, Nb, Zn, Zr, Al, Ta et leurs alliages,

d) un revêtement diélectrique intermédiaire,

e) une seconde couche fonctionnelle à base d'argent,

f) une couche absorbante,

g) de manière optionnelle, une ou deux couches de métal sacrificiel, éventuellement sous-oxydé, choisi parmi un ou plusieurs des matériaux suivants : Ti, Ni, Cr, Nb, Zn, Zr, Al, Ta et leurs alliages,

h) un revêtement diélectrique externe.

En utilisant par exemple une couche absorbante en palladium, des couches de métal sacrificiel de NiCr sous-oxydé sous forme NiCrOx et un revêtement diélectrique externe de $Si_3N_4$, on peut aisément former un empilage dont les propriétés optiques ne sont pas altérées par une opération de traitement thermique à haute température du type trempe et/ou bombage, c'est-à-dire que la feuille de verre revêtue et ensuite trempée peut être juxtaposée à côté d'une feuille de verre portant le même empilage mais qui n'a pas subi de traitement thermique car elle possède le même aspect esthétique. L'absorption conférée à l'empilage par le palladium n'est pas altérée par le traitement thermique.

Avantageusement, lorsque l'argent est utilisé en tant que matériau réfléchissant l'infrarouge, une couche à base de d'oxyde ou de sous-oxyde de zinc, éventuellement dopé avec de l'aluminium par exemple, est disposée sous chaque couche d'argent et en contact direct avec elle. Cette association est particulièrement bénéfique en ce qui concerne la résistance à la corrosion de l'argent.

De préférence, l'empilage comprend dans l'ordre au moins la succession suivante de couches à partir de la feuille de matière vitreuse :

a) un premier revêtement diélectrique contenant au moins une couche à base d'un oxyde mixte zinc-étain,

b) une première couche fonctionnelle à base d'argent,

c) une ou deux couches de métal sacrificiel, éventuellement sous-oxydé, choisi parmi un ou plusieurs des matériaux suivants : Ti, Ni, Cr, Nb, Zn, Zr, Al, Ta et leurs alliages,

d) un revêtement diélectrique intermédiaire,

e) une seconde couche fonctionnelle à base d'argent,

f) une couche absorbante à base de palladium,

g) de manière optionnelle, une ou deux couches de métal sacrificiel, éventuellement sous-oxydé, choisi parmi un ou plusieurs des matériaux suivants : Ti, Ni, Cr, Nb, Zn, Zr, Al, Ta et leurs alliages,

h) revêtement diélectrique externe contenant au moins une couche à base d'un oxyde mixte zinc-étain.

Et avantageusement, tous les revêtements diélectriques comprennent une couche à base d'un oxyde mixte zinc-étain à environ 50% d'étain et de zinc, et une couche à base d'un oxyde mixte zinc-étain n'ayant pas plus d'environ 10% d'étain et au moins environ 90% de zinc, cette dernière couche étant chaque fois disposée plus près de la couche fonctionnelle qui suit que la couche d'oxyde mixte à environ 50% d'étain. On a découvert que cet arrangement permet d'obtenir un empilage anti-solaire à faible facteur solaire et haute sélectivité qui présente une excellente résistance à la corrosion et qui supporte aisément un traitement thermique à haute température sans perte de ses propriétés absorbantes ni perte des propriétés de réflexion dans l'infrarouge. Cette structure permet également d'obtenir aisément un empilage de teinte neutre en réflexion.

L'empilage se termine avantageusement par une couche de protection comprenant un mince film terminal de $SiO_2$ ou de SiC de 1,5 à 10 nm d'épaisseur. Dans le cas d'un empilage apte à subir un traitement thermique à haute température, la couche de protection se compose avantageusement d'un mince film de TiN, qui s'oxyde pendant le traitement thermique pour former du $TiO_2$, suivi d'un film terminal de $SiO_2$ ou de SiC.

De préférence, l'empilage se termine par une fine couche de protection à base de carbone de 1,5 à 10 nm d'épaisseur. Cette couche de protection, déposée par pulvérisation cathodique à partir d'une cible de carbone en atmosphère neutre, est très utile pour protéger l'empilage pendant les manutentions, le transport et l'entreposage avant le traitement thermique. En ce qui concerne l'utilisation de carbone, cette couche de protection brûle lors du traitement thermique à haute température et disparaît complètement du produit fini.

L'invention s'étend à une feuille de verre, portant un empilage tel que défini ci-dessus.

De préférence, cette feuille de verre présente une teinte examinée en réflexion côté verre représentée par L* compris entre 30 et 55, avantageusement entre 40 et 50, a* compris entre -4 et +3, avantageusement entre -2,5 et +1,5, et b* compris entre -4 et -16, avantageusement entre -6 et -13.

De préférence, cette feuille de verre a subi un traitement thermique de trempe et/ou de bombage après dépôt de l'empilage multicouche.

De préférence, 4 à 35%, de préférence 8 à 22%, de l'absorption lumineuse de l'empilage après traitement thermique sont imputables à la matière absorbante. L'invention permet notamment d'obtenir après traitement thermique un vitrage ayant un niveau d'absorption relativement élevé avec un aspect esthétiquement agréable.

L'invention s'étend aussi à un ensemble formé d'un premier groupe comprenant au moins une feuille de verre selon l'invention qui a subi un traitement thermique à haute température et d'un second groupe comprenant au moins une feuille de verre selon l'invention n'ayant pas subi de traitement thermique, caractérisé en ce que les deux groupes ont un aspect visuel similaire en réflexion côté verre, de sorte qu'ils puissent être juxtaposés sans différence visuelle significative.

L'invention s'étend également à un vitrage multiple, notamment un vitrage double, comprenant une feuille de verre portant un empilage tel que défini ci-dessus, ayant ou non subi un traitement thermique de trempe et/ou de bombage après dépôt de l'empilage multicouche.

De préférence, le vitrage multiple selon l'invention présente un facteur solaire FS compris entre 15 et 40%, une transmission lumineuse d'au moins 30% et une couleur relativement neutre en transmission et neutre à légèrement bleuté en réflexion du côté de la feuille de verre portant l'empilage. De préférence, le vitrage multiple selon l'invention présente un facteur solaire FS compris entre 20 et 35%, avantageusement entre 25 et 35%, avec une transmission lumineuse d'au moins 45%, avantageusement d'au moins 50% et idéalement d'au moins 55%. Ce vitrage multiple présente des propriétés anti-solaires particulièrement bénéfiques par rapport à sa transmission lumineuse relativement élevée, tout en ayant un aspect esthétique qui lui permet d'être facilement intégré dans un ensemble architectural.

De préférence, le vitrage multiple présente une teinte en réflexion côté de la feuille de verre portant l'empilage, empilage disposé vers l'espace intérieur du vitrage multiple, représentée par L* compris entre 40 et 55, de préférence entre 45 et 52, a* compris entre 1,5 et -6, de préférence entre 0,5 et -4, et b* compris entre -3 et -15, de préférence entre -5 et -12.

L'invention sera maintenant décrite plus en détail, de manière non limitative, à l'aide des exemples de réalisations préférées ci-après.

**Exemples :**

**Exemple 1.**

Une feuille de verre float clair sodo-calcique ordinaire de 2 m sur 1 m et de 6 mm d'épaisseur est placée dans un dispositif de pulvérisation cathodique, assisté d'un champ magnétique, à pression réduite (environ 0,3 Pa) du type magnétron. Sur cette feuille de verre, on dépose un empilage anti-solaire multicouche qui comprend, en séquence :

a) Un premier revêtement diélectrique formé de deux couches d'oxydes déposés dans une atmosphère réactive constituée d'un mélange d'argon et d'oxygène à partir de cathodes d'alliages zinc-étain de compositions différentes. Le premier oxyde mixte zinc-étain, d'environ 30 nm d'épaisseur, est formé à partir de cathodes d'un alliage zinc-étain à 52% en poids de zinc et 48% en poids d'étain pour former la structure spinelle de stannate de zinc $Zn_2SnO_4$. Le second oxyde mixte zinc-étain $ZnSnO_x$, d'environ 10 nm, est déposé à partir de cibles d'un alliage zinc-étain à 90% en poids de zinc et 10% en poids d'étain.

b) Une première couche fonctionnelle réfléchissant l'infrarouge formée d'environ 11 nm d'argent à partir d'une cible d'argent pratiquement pur dans une atmosphère neutre d'argon.

c) Une première double couche de métal sacrificiel formée d'une première couche de NiCr de 1 nm d'épaisseur déposé à partir d'une cible d'un alliage à 80% de Ni et à 20% de Cr, et d'une seconde couche de Ti de 2,5 nm d'épaisseur déposé à partir d'une cible de titane. Ces couches sont toutes deux déposées dans un flux d'argon légèrement contaminé par l'oxygène des chambres voisines. Il est à noter que l'atmosphère oxydante du plasma lors du dépôt de la couche suivante, décrite ci-dessous, oxyde totalement la couche de titane de telle sorte qu'à la fin du processus de dépôt du second diélectrique, le titane est substantiellement totalement oxydé pour former une couche compacte de $TiO_2$. En variante, il est aussi possible de déposer la couche sous forme de TiOx partiellement oxydée. Cette couche peut aussi, par exemple, être déposée à partir d'une cible céramique de TiOx dans une atmosphère d'Ar contenant une faible proportion d'oxygène destinée à maintenir un niveau d'oxydation suffisant du TiOx pour qu'il soit transparent. Elle peut aussi être oxydée par le plasma utilisé pour le dépôt de la couche suivante.

d) Un second revêtement diélectrique formé de deux couches d'oxydes mixtes zinc-étain déposés dans une atmosphère réactive constituée d'un mélange d'oxygène et d'argon à partir de cathodes d'alliages zinc-étain de compositions différentes. Le premier oxyde mixte zinc-étain, d'environ 77 nm d'épaisseur, est déposé à partir de cibles métalliques d'un alliage de ZnSn à 52% de Zn et 48% de Sn (en poids) pour former la structure spinelle de stannate de zinc $Zn_2SnO_4$. Le second oxyde mixte zinc-étain $ZnSnO_x$, d'environ 13 nm d'épaisseur, est déposé à partir de cibles d'un alliage de ZnSn à 90% de Zn et 10% de Sn (en poids).

e) Une seconde couche fonctionnelle réfléchissant l'infrarouge formée d'environ 18 nm d'argent à partir d'une cible d'argent pratiquement pur dans une atmosphère neutre d'argon.

f) Une couche de matière absorbante formée d'environ 1 nm de palladium à partir d'une cible de palladium dans la même atmosphère neutre d'argon que la couche e).

g) Une seconde double couche de métal sacrificiel formée d'une première couche de 1 nm de NiCr surmontée d'une seconde couche de 2,5 nm de Ti, de la même manière que pour la première double couche de métal sacrificiel décrite ci-dessus.

h) Un troisième revêtement diélectrique, revêtement diélectrique externe, formé de deux couches d'oxydes déposés dans une atmosphère réactive constituée d'un mélange d'oxygène et d'argon à partir de cathodes d'alliages zinc-étain de compositions différentes. Le premier oxyde mixte zinc-étain $ZnSnO_x$, d'environ 7 nm d'épaisseur, est déposé à partir de cibles métalliques d'un alliage de ZnSn à 90% de Zn et 10% de Sn (en poids). Le second oxyde mixte zinc-étain, d'environ 17 nm d'épaisseur, est déposé à partir de cibles d'un alliage de ZnSn à 52% de Zn et 48% de Sn (en poids) pour former la structure spinelle de stannate de zinc $Zn_2SnO_4$.

i) L'empilage est ensuite finalisé par le dépôt d'une couche supérieure de protection de 5 nm de TiN déposé dans une atmosphère d'azote à partir d'une cible de titane.

Il faut noter que toutes les couches de $ZnSnO_x$ sont suffisamment oxydées pour être le plus transparent possible. Il faut noter aussi que les épaisseurs de Ti, TiOx et de TiN sont données en épaisseur de $TiO_2$ équivalent (c'est-à-dire provenant de l'oxydation du Ti, TiOx ou du TiN), qui est leur état dans le produit fini après traitement thermique, et même déjà l'état dans le vitrage intermédiaire apte à subir un traitement thermique en ce qui concerne Ti.

Lorsque la feuille de verre fraîchement revêtue par l'empilage anti-solaire multicouche sort du dispositif de dépôt de couche, elle présente les propriétés suivantes :

TL= 51,1% ; FS= 32,5% $\varepsilon$ (émissivité)= 0.025; absorption = 34,5% dont environ 10% sont imputables à la couche de matière absorbante en palladium ;
la teinte en transmission est exprimée par les valeurs suivantes :
L*= 71,5; a*= -3,9; b*= +3,5
la teinte en réflexion côté verre est exprimée par les valeurs suivantes :
RL= 14,5% ; L*= 45,5 ; a*= -10,0 ; b*= -15,8 ; $\lambda_d$= 478 nm ; pureté= 30,7%.

Dans la présente invention, les conventions suivantes sont utilisées pour les valeurs mesurées ou calculées. La transmission lumineuse (TL), la réflexion lumineuse (RL), l'absorption lumineuse (AL) (pourcentage du flux lumineux -de l'Illuminant D65- absorbé par le vitrage) et la teinte en transmission (valeurs CIELAB 1976 L*a*b*) sont mesurées avec l'Illuminant D65/2°. En ce qui concerne la teinte en réflexion, les valeurs CIELAB 1976 (L*a*b*), ainsi que la longueur d'onde dominante ($\lambda_d$) et la pureté (p) sont mesurées avec l'Illuminant D65/10°. Le facteur solaire (FS ou g) est calculé selon la norme EN410. La valeur U (coefficient k) et l'émissivité ($\varepsilon$) sont calculés selon les normes EN673 et ISO 10292.

Le vitrage revêtu, avec l'empilage anti-solaire multicouche formé sur la feuille de verre, subit ensuite une opération de trempe thermique au cours de laquelle il est soumis pendant 6 minutes à une température de 690°C puis refroidi brutalement par des jets d'air froid. Pendant ce traitement thermique, les minces films de NiCr des couches barrières s'oxydent suffisamment pour être transparents tout en constituant un écran efficace et stable pour protéger les couches d'argent. La couche supérieure de protection en TiN quant à elle s'oxyde pour former du $TiO_2$.

Après ce traitement, le vitrage revêtu et trempé présente les propriétés suivantes :

TL= 68,1% $\varepsilon$ (émissivité)= 0,023 ; Rs= 1,6 $\Omega$/carré ; Absorption= 21,2%, dont environ 10% sont imputables à la couche de matière absorbante en palladium ;
la teinte en transmission est exprimée par les valeurs suivantes :
L*=86,1 ; a*=-2,0 ; b*= +1,2 ; « haze » = 0,09% ;
et la teinte en réflexion côté verre est exprimée par les valeurs suivantes :
RL= 10,6% ; L*=39,3 ; a*=-2,1; b*=-12,1; $\lambda_D$= 474 nm ; p= 22.1%.

La valeur de « haze » est définie comme étant le rapport, multiplié par 100 pour l'obtenir en %, de la transmission lumineuse diffuse sur la transmission lumineuse totale. Cette valeur est mesurée selon la norme ASTM D1003.

On peut constater que la valeur de l'absorption due à la couche absorbante n'a pas diminué suite au traitement thermique à haute température.

Ce vitrage revêtu est ensuite assemblé en double vitrage avec une autre feuille de verre clair de 6 mm, le revêtement étant disposé côté de l'espace intérieur du double vitrage. L'espace entre les deux feuilles est de 15 mm et l'air y est remplacé par de l'argon. En observant le double vitrage côté verre du vitrage revêtu, l'empilage étant placé en position 2, c'est-à-dire qu'on voit d'abord le vitrage pourvu de l'empilage observé côté verre, puis la feuille de verre clair sans couche, on note les propriétés suivantes :

TL= 61,7% ; RL= 14,4% ; FS= 36,5% ; S= 1,7 valeur U= 1,05 W/(m$^2$.K);
la teinte en transmission est exprimée par les valeurs suivantes :
L*=82,8 ; a*= -2,9 ; b*= +1,4
la teinte en réflexion est exprimée par les valeurs suivantes :
L*= 45,0 ; a*= -2,5 ; b*= -9,9 ; $\lambda_D$=475nm; p= 17,1%.

L'examen visuel en réflexion du vitrage double montre une teinte et un aspect uniformes sur toute la surface. L'invention permet d'obtenir un vitrage double à faible facteur solaire, qui conserve une transmission lumineuse suffisante, et avec une très bonne qualité esthétique.

**Exemple 2.**

L'exemple N°2 est réalisé de manière identique à l'exemple 1, mais avec une structure d'empilage différente. Dans cet exemple, la séquence suivante est adoptée :

a) Un premier revêtement diélectrique formé de deux couches d'oxydes déposés dans une atmosphère réactive constituée d'un mélange d'argon et d'oxygène à partir de cathodes d'alliages zinc-étain de compositions différentes. Le premier oxyde mixte zinc-étain, d'environ 24 nm d'épaisseur, est formé à partir de cathodes d'un alliage zinc-étain à 52% en poids de zinc et 48% en poids d'étain pour former la structure spinelle de stannate de zinc $Zn_2SnO_4$. Le second oxyde mixte zinc-étain $ZnSnO_x$, d'environ 8 nm, est déposé à partir de cibles d'un alliage zinc-étain à 90% en poids de zinc et 10% en poids d'étain.

b) Une première couche fonctionnelle réfléchissant l'infrarouge formée d'environ 9 nm d'argent à partir d'une cible d'argent pratiquement pur dans une atmosphère neutre d'argon.

c) Une première couche de métal sacrificiel formée par une épaisseur de 5 nm de Ti déposé à partir d'une cible de titane. Cette couche est déposée dans un flux d'argon légèrement contaminé par l'oxygène des chambres voisines. Il est à noter que l'atmosphère oxydante du plasma lors du dépôt de la couche suivante, décrite ci-dessous, n'oxyde que partiellement cette couche de titane.

d) Un second revêtement diélectrique formé de deux couches d'oxydes mixtes zinc-étain déposés dans une atmosphère réactive constituée d'un mélange d'oxygène et d'argon à partir de cathodes d'alliages zinc-étain de compositions différentes. Le premier oxyde mixte zinc-étain, d'environ 65 nm d'épaisseur, est déposé à partir de cibles métalliques d'un alliage de ZnSn à 52% de Zn et 48% de Sn (en poids) pour former la structure spinelle de stannate de zinc $Zn_2SnO_4$. Le second oxyde mixte zinc-étain $ZnSnO_x$, d'environ 10 nm d'épaisseur, est déposé à partir de cibles d'un alliage de ZnSn à 90% de Zn et 10% de Sn (en poids).

e) Une seconde couche fonctionnelle réfléchissant l'infrarouge formée d'environ 15 nm d'argent à partir d'une cible d'argent pratiquement pur dans une atmosphère neutre d'argon.

f) Une couche de matière absorbante formée d'environ 1,8 nm de palladium à partir d'une cible de palladium dans la même atmosphère neutre d'argon que la couche e).

g) Une seconde couche de métal sacrificiel formée de 2,5 nm de Ti de la même manière que la première couche de métal sacrificiel décrite ci-dessus, et qui sera oxydée par l'atmosphère du plasma de dépôt du revêtement diélectrique suivant.

h) Un troisième revêtement diélectrique, revêtement diélectrique externe, formé de deux couches d'oxydes déposés dans une atmosphère réactive constituée d'un mélange d'oxygène et d'argon à partir de cathodes d'alliages zinc-étain de compositions différentes. Le premier oxyde mixte zinc-étain $ZnSnO_x$, d'environ 7 nm d'épaisseur, est déposé à partir de cibles métalliques d'un alliage de ZnSn à 90% de Zn et 10% de Sn (en poids). Le second oxyde mixte zinc-étain, d'environ 15 nm d'épaisseur, est déposé à partir de cibles d'un alliage de ZnSn à 52% de Zn et 48% de Sn (en poids) pour former la structure spinelle de stannate de zinc $Zn_2SnO_4$.

i) L'empilage est ensuite finalisé par le dépôt d'une couche supérieure de protection de 5 nm de Ti déposé dans une atmosphère neutre d'argon à partir d'une cible de titane.

Il faut noter que les épaisseurs de Ti sont données en épaisseur de $TiO_2$ équivalent (c'est-à-dire provenant de l'oxydation du Ti), qui est leur état dans le produit fini après traitement thermique. En outre, pour la couche g), le Ti est déjà à son état oxydé dans le vitrage intermédiaire apte à subir un traitement thermique.

Lorsque la feuille de verre fraîchement revêtue par l'empilage anti-solaire multicouche sort du dispositif de dépôt de couche, elle présente les propriétés suivantes :

TL= 19.7% ; FS= 26.4% ; ε (émissivité)= 0.030; absorption = 67.4% dont environ 20% sont imputables à la couche de matière absorbante en palladium ;
la teinte en transmission est exprimée par les valeurs suivantes :
L*= 51.4; a*= -6.1; b*= -6.8
la teinte en réflexion côté verre est exprimée par les valeurs suivantes :
RL= 12.9% ; L*= 42.7 ; a*= -5.8 ; b*= -31.9 ; $\lambda_d$= 480 nm ; pureté= 49.9%.

Le vitrage revêtu, avec l'empilage anti-solaire multicouche formé sur la feuille de verre, subit ensuite une opération de trempe thermique au cours de laquelle il est soumis pendant 6 minutes à une température de 690°C puis refroidi brutalement par des jets d'air froid. Pendant ce traitement thermique, le titane qui est encore sous forme métallique, notamment au sein de la première couche de métal sacrificiel c), s'oxyde suffisamment pour être transparent tout en constituant un écran efficace et stable pour protéger la couche d'argent sous-jacente. La couche supérieure de protection en Ti quant à elle s'oxyde également pour former une couche supérieure de protection transparente en TiO$_2$.

Après ce traitement, le vitrage revêtu et trempé présente les propriétés suivantes :

TL= 59.1% ε (émissivité)= 0,026 ;Rs= 1.8 Ω/carré ; Absorption= 31.0% dont environ 20% sont imputables à la couche de matière absorbante en palladium ;
la teinte en transmission est exprimée par les valeurs suivantes :
L*=81.3 ; a*=-3,0 ; b*= -5.0; « haze » = 0,12% ;
et la teinte en réflexion côté verre est exprimée par les valeurs suivantes :
RL=9.9% ; L*=37.6; a*=-0.1 ; b*=-5.6 ; λ$_D$=477nm; p= 9.6%.

On peut constater que la valeur de l'absorption due à la couche absorbante n'a pas diminué suite au traitement thermique à haute température.

Ce vitrage revêtu est ensuite assemblé en double vitrage avec une autre feuille de verre clair de 6 mm, le revêtement étant disposé côté de l'espace intérieur du double vitrage. L'espace entre les deux feuilles est de 15 mm et l'air y est remplacé par de l'argon. En observant le double vitrage côté verre du vitrage revêtu, l'empilage étant placé en position 2, c'est-à-dire qu'on voit d'abord le vitrage pourvu de l'empilage observé côté verre, puis la feuille de verre clair sans couche, on note les propriétés suivantes :

TL= 53.0% ; RL= 12.7% ; FS= 29.9% ; S= 1.78 valeur U= 1,1 W/(m$^2$.K);
la teinte en transmission est exprimée par les valeurs suivantes :
L*=77.9 ; a*= -4.1 ; b*= -4.0
la teinte en réflexion est exprimée par les valeurs suivantes :
L*= 42.3 ; a*= -0.9 ; b*= -6.1; λ$_D$= 480 nm ; p= 15.6%.

L'examen visuel en réflexion du vitrage double montre une teinte et un aspect uniformes sur toute la surface. L'invention permet d'obtenir un vitrage double à très faible facteur solaire, qui conserve une transmission lumineuse suffisante, et avec une très bonne qualité esthétique.

## Exemples 3 à 15.

Les exemples 3 à 15 qui suivent sont réalisés, sauf avis contraire, de manière similaire à l'exemple 1 ci-dessus, mais avec des structures différentes.

Les exemples 11 et 15 sont conformes à l'invention, tandis que les exemples 3 à 10 et 12 à 14 sont des exemples comparatifs, hors invention.

Les structures des empilages correspondants sont données dans le tableau 1 ci-dessous avec la signification suivante des sigles utilisés :

- D1= premier revêtement diélectrique formé de deux ou trois couches d'oxyde ou de nitrure ou éventuellement d'oxy-nitrure. Les couches de nitrure sont déposées dans un mélange réactif d'azote et d'argon à partir de cible métallique. Ceci est valable pour les autres diélectriques de l'empilage, si le cas se présente. Les couches Si$_3$N$_4$ utilisées dans les exemples peuvent être légèrement oxydées sous forme SiOxNy. Il est à noter que les couches Si$_3$N$_4$ et ZnO peuvent être, de manière bien connue, dopée avec de l'aluminium.

- D2= revêtement diélectrique intermédiaire formé, s'il est présent selon l'exemple, de couches d'oxyde ou de nitrure ou éventuellement d'oxy-nitrure, comme D1.

- D3= revêtement diélectrique externe formé d'une ou deux couches d'oxyde ou de nitrure ou éventuellement d'oxy-nitrure, comme D1.

- IR1 et IR2= première et seconde couches fonctionnelles réfléchissant l'infrarouge.

- P1 et P2= première et seconde couches de métal sacrificiel formées chacune d'une ou deux couches de métal ou d'alliage métallique, sous forme métallique ou éventuellement sous-oxydée. Ces couches sont destinées à protéger le matériau réfléchissant l'infrarouge (IR1 et IR2), tel que l'argent, de l'oxydation en s'oxydant à sa place, notamment lors du dépôt des couches ultérieures ou lors du traitement thermique de la couche si tel est le cas. Dans le produit final, elles seront de préférence substantiellement totalement oxydées.

Le tableau 1 représente l'état des couches à la sortie du dispositif de pulvérisation cathodique avant tout traitement thermique éventuel, c'est-à-dire que les couches de métal sacrificiel ont déjà été oxydées par le plasma de dépôt des couches suivantes lorsque tel est le cas. Dans ce cas, elles sont représentées par leur état oxydé et non pas sous la forme qu'elles ont été déposées. Par exemple, $TiO_2$, $ZAlO_5$ et $Nb_2O_5$ des colonnes P1 et/ou P2 des exemples 3 à 7 et 11 à 15 ont été déposés sous forme métallique et oxydés lors du dépôt de l'oxyde suivant et ne constituent plus une réserve d'oxydation pour un traitement ultérieur éventuel. Par contre, NiCrOx et TiOx des exemples 9, 10 et 13 sont déposés sous forme sous-oxydées et restent sous-oxydés à la fin du processus de dépôt de sorte qu'ils constituent une réserve d'oxydation pour le traitement thermique ultérieur. NiCrOx (exemples 9 et 13) est déposé à partir d'une cathode de NiCr dans une atmosphère réactive légèrement oxydante avec une boucle de contrôle de l'état d'oxydation, tandis que TiOx (exemple 10) est déposé à partir d'une cathode céramique TiOx dans une atmosphère essentiellement constituée d'argon. On pourrait aussi, dans le cadre de l'invention, déposer TiOx de la même manière que NiCrOx. Dans l'exemple 15 (en P1), TiOx est aussi déposé à partir d'une cathode céramique TiOx dans une atmosphère essentiellement constituée d'argon, avec une faible proportion d'oxygène, et se trouve dans un état fortement oxydé après dépôt de l'oxyde suivant (ZSO5).

NiCr (P1, exemple 4) est un alliage métallique à 80% en poids de nickel et 20% en poids de chrome utilisé en tant que métal sacrificiel. NiV (P1 et P2, exemple 6) est un alliage métallique à 93% en poids de nickel et 7% en poids de vanadium utilisé aussi en tant que métal sacrificiel. Ils forment tous deux (NiCr et NiV) dans ces exemples une réserve d'oxydation pour l'opération ultérieure de traitement thermique à haute température. Après traitement thermique, ils sont oxydés.

Dans le cas de Ti**Ru**15 de l'exemple 8, Ti constitue une réserve d'oxydation pour l'opération ultérieure de traitement thermique, tandis que Ru est la matière absorbante qui reste sous forme métallique absorbante après traitement thermique.

- CS= couche supérieure de protection, éventuellement formée de deux couches.

- AB= couche absorbante si la matière absorbante est déposée sous forme de couche séparée.

Sinon la matière absorbante est présente sous forme d'un alliage, ou sous forme de dopage, avec la matière réfléchissante l'infrarouge et/ou avec le métal sacrificiel. Dans le tableau 1, la matière absorbante est représentée en caractères gras. Le chiffre indiqué à côté du matériau absorbant indique le pourcentage atomique de ce matériau dans l'alliage avec le matériau de la couche fonctionnelle ou du métal sacrificiel. Ag:**Pd**3 par exemple signifie qu'il y a 3% atomique de palladium absorbant dans l'argent, et ainsi de suite pour Ag:**Pd**2, Ag:**Pd**30, Ag:**Co**5, Ag:**Os**11 et Ag :**Au**8. De même, Ti**Ru**15 signifie qu'il y a 15% atomique de ruthénium absorbant dans l'alliage avec le métal sacrificiel Ti ; et ainsi de suite.

Ag:**NiCr**10 signifie qu'il y a 10% atomique de l'alliage NiCr (alliage à 80% en poids de Ni et 20 % en poids de Cr) dans l'argent. Cette couche fonctionnelle contenant la matière absorbante peut être déposée par co-pulvérisation à partir d'une cathode d'argent et une cathode NiCr ou elle peut être obtenue d'une seule cathode d'un alliage AgNiCr.

A titre de variante de l'exemple 12, on a utilisé Ag:**NiV**10, avec 10% atomique de NiV (alliage à 93% en poids de Ni et 7% en poids de vanadium) dans l'argent et on a obtenu les mêmes résultats que ceux listés ci-dessous.

**CoCr** est un alliage à 80 % en poids de Co et 20% en poids de Cr. Cet alliage peut être déposé par magnétron sans problème lié au fait que le CoCr n'est pas ferromagnétique, tout comme pour NiCr ou NiV repris ci-dessus, au contraire de Co pur et de Ni pur.

- ZSO5= oxyde mixte zinc étain obtenu par pulvérisation cathodique dans une atmosphère oxydante à partir d'une cible métallique d'un alliage de ZnSn à 52% de Zn et 48% de Sn ;

- ZSO9= oxyde mixte zinc étain obtenu par pulvérisation cathodique dans une atmosphère oxydante à partir d'une cible métallique d'un alliage de ZnSn à 90% de Zn et 10% de Sn ;

- ZAlO2 ou ZAlO5= oxyde de zinc ZnO contenant respectivement 2 ou 5% atomique d'aluminium Al.

Tableau 1.

| Ex. | D1 (nm) | | | AB (nm) | IR1 (nm) | AB (nm) | P1 (nm) | | D2 (nm) | | AB (nm) | IR2 (nm) | AB (nm) | P2 (nm) | | D3 (nm) | | | CS (nm) | |
|---|---|---|---|---|---|---|---|---|---|---|---|---|---|---|---|---|---|---|---|---|
| 3 | ZSO5 (25) | ZSO9 (12) | | - | Ag (24) | **Pt** (0,4) | $ZAlO_5$ (2) | | - | | - | - | - | | - | | $ZAlO_5$ (10) | ZSO5 (37) | | $TiO_2$ (5) | $Si_3N_4$ (1,5) |
| 4 | $Si_3N_4$ (26) | ZAlO5 (11) | | - | Ag:**Pd**30 (18) | - | NiCr (1,2) | $TiO_2$ (2,5) | ZSO5 (71) | ZSO9 (11) | - | Ag (14) | - | Ti (3) | $TiO_2$ (3) | $SiO_2$ (32) | | | - | |
| 5 | ZSO5 (29) | ZSO9 (7) | | - | Ag:**Co**5 (10) | - | Cr (2) | $TiO_2$ (2,5) | ZSO5 (75) | ZSO9 (9) | - | Ag:**Co**5 (16) | - | Cr (2) | $TiO_2$ (3) | ZSO9 (7) | ZSO5 (20) | | Ti (3) | |
| 6 | ZSO5 (24) | ZSO9 (10) | | - | Ag (9) | - | NiV (1) | $TiO_2$ (2,5) | ZSO5 (77) | ZSO9 (10) | **Ir** (0,9) | Ag (17) | - | NiV (1) | $TiO_2$ (2,5) | ZSO9 (6) | ZSO5 (18) | | TiN (2) | $SiO_2$ (2) |
| 7 | ZSO5 (28) | ZSO9 (9) | | **Pt** (4,8) | Ag (18) | - | Ti (3) | $TiO_2$ (3) | ZSO5 (71) | ZSO9 (11) | - | Ag (14) | - | Ti (3) | $TiO_2$ (3) | $SiO_2$ (30) | | | - | |
| 8 | $TiO_2$ (16) | NiCrO (6) | $TiO_2$ (6) | - | Ag (11) | TiRu15 (6) | | | $Si_3N_4$ (51) | $TiO_2$ (20) | - | Ag (14) | TiRu15 (6) | | | $SiO_2$ (6) | $Si_3N_4$ (30) | | - | |
| 9 | $Si_3N_4$ (34) | ZAlO5 (8) | | **Pd** (1) | Ag:**Pd**3 (21) | - | NiCrOx (6) | | $Si_3N_4$ (68) | ZAlO5 (10) | - | Ag:**Pd**2 (26) | **Pd** (0,8) | NiCrOx (6) | | $ZAlO_5$ (7) | $Si_3N_4$ (18) | | - | |
| 10 | ZSO5 (39) | ZSO9 (9) | | - | Ag:**Os**11 (17) | - | TiOx (6) | | $Si_3N_4$ (71) | ZA102 (11) | - | Ag:**Os**11 (16) | - | TiOx (6) | | $SiO_2$ (30) | | | - | |
| 11 | $SnO_2$ (25) | ZnO (9) | | - | Ag (18) | **CoCr** (1,5) | $TiO_2$ (2,5) | | - | | - | - | - | - | | ZnO (18) | ZSO5 (12) | | $SnO_2$ (20) | |
| 12 | $TiO_2$ (10) | ZnO (15) | | - | Ag (10) | - | $Nb_2O_5$ (2,5) | | $SnO_2$ (64) | ZnO (22) | - | Ag:**NiCr**10 (17) | - | $Nb_2O_5$ (3) | | ZnO (13) | | | $SnO_2$ (18) | |
| 13 | $Si_3N_4$ (20) | ZAlO2 (6) | | - | Ag (10) | - | NiCrOx (5) | | ZSO5 (70) | ZSO9 (9) | **Pd** (1,5) | Ag (20) | - | Ti (3) | $TiO_2$ (3) | ZSO9 (7) | ZSO5 (24) | | TiN (5) | C (5) |
| 14 | ZSO5 (29) | ZSO9 (6) | | - | Ag (13) | - | Ti (3) | $TiO_2$ (3) | ZSO5 (58) | ZSO9 (20) | - | Ag-**Au**8 (20) | - | Ti (3) | $TiO_2$ (3) | ZSO5 (20) | | | TiN (3) | SiC (5) |
| 15 | $SnO_2$ (16) | ZnO (20) | | - | Ag (10) | - | TiOx (12) | | ZSO5 (35) | ZnO (39) | | Ag (20) | **Pd** (1,2) | $TiO_2$ (2) | | Zn O (12) | ZSO5 (10) | $SnO_2$ (10) | - | |

Les feuilles de verre des exemples 3 à 15 ont 6 mm d'épaisseur.

Les vitrages revêtus des empilages selon les exemples 3 à 10 et 13-14 ont subi ensuite une opération de trempe thermique au cours de laquelle ils ont été soumis pendant 6 minutes à une température de 690°C puis refroidi brutalement par des jets d'air froid.

Les propriétés optiques et énergétiques des vitrages revêtus, après traitement de trempe si tel est le cas (exemples 3 à 10 et 13-14) ou après revêtement s'ils ne sont pas traités thermiquement (exemples 11, 12 et 15), sont données dans le tableau 2.

Les valeurs données pour les exemples 3 à 8 et 13-14 sont des valeurs après traitement thermique.

Pour les exemples 9 et 10, les valeurs avant traitement thermique sont également données (tableaux 2 et 3) dans une ligne en italique repérée AT (avant trempe). On constate pour ces deux exemples que les propriétés n'ont pas changés significativement suite au traitement de trempe et que les versions trempées sont donc juxtaposables avec leurs versions homologues non-trempées.

Dans les exemples 3 à 10 et 13-14, on constate que les vitrages revêtus sont absorbants après trempe et que l'émissivité est faible.

Les exemples 11, 12 et 15 sont des empilages non trempables, c'est-à-dire qu'ils sont utilisés tels quels sans subir de traitement thermique. Les valeurs données dans le tableau 2 pour les exemples 11, 12 et 15 sont donc les valeurs mesurées à la sortie du dispositif de dépôt de couches ou après stockage sans traitement thermique.

- $L_{RV}{}^*$, $a_{RV}{}^*$, $b_{RV}{}^*$ représentent les valeurs CIELAB 1976 de la teinte en réflexion côté verre.

- $\lambda_{d(RV)}$ et $p_{(RV)}$ représentent la longueur d'onde dominante et la pureté de la teinte en réflexion côté verre.

- $\Delta E^* = \sqrt{\left(\Delta L^*\right)^2 + \left(\Delta a^*\right)^2 + \left(\Delta b^*\right)^2}$  représente la variation de teinte durant le traitement thermique.

Tableau 2.

| Ex. | TL(%) | RL(%) | AL(%) | FS(%) | ε | $L_{RV}{}^*$ | $a_{RV}{}^*$ | $b_{RV}{}^*$ | $\lambda_{d(RV)}$ (nm) | $P_{(RV)}$ (%) | $\Delta E^*$ |
|---|---|---|---|---|---|---|---|---|---|---|---|
| 3 | 47,7 | 43,7 | 8,6 | 31,3 | 0,03 | 72,2 | -2,3 | -3,3 | 479 | 4,7 | - |
| 4 | 42,5 | 14,8 | 42,8 | 27,5 | 0,03 | 45,5 | -0,9 | -8,1 | 473 | 13,1 | - |
| 5 | 67,8 | 11,0 | 21,3 | 40,5 | 0,03 | 39,8 | -1,9 | 10,4 | 474 | 18,8 | - |
| 6 | 67,6 | 11,2 | 21,3 | 43,0 | 0,02 | 41,0 | -2,7 | - 10,3 | 474 | 19,1 | - |
| 7 | 43,1 | 14,5 | 42,5 | 27,5 | 0,04 | 45,1 | -1,6 | -7,3 | 474 | 12,5 | - |
| 8 | 60,8 | 10,5 | 28,7 | 37,5 | 0,03 | *39,2* | *-1,8* | *- 12,9* | *473* | *23,4* | - |
| *9 AT* | *33,9* | *27,0* | *39,1* | *22,7* | *0,04* | *59,0* | *-1,5* | *-2,0* | *479* | *3,5* | 1,00 |
| 9 | 34,2 | 27,7 | 38,0 | 23,2 | 0,04 | 59,7 | -2,2 | -2,2 | 480 | 4,1 | |
| *10 AT* | *56,5* | *11,4* | *32,1* | *33,6* | *0,04* | *40,2* | *0,2* | *- 14,9* | *471* | *24,6* | 1,05 |
| 10 | 57,6 | 10,8 | 31,6 | 34,0 | 0,03 | 39,6 | 0,7 | -15,6 | 470 | 25,7 | |
| 11 | 58,7 | 32,1 | 9,2 | 40,2 | 0,04 | 63,7 | -3,0 | -6,3 | 477 | 9,2 | - |
| 12 | 68,6 | 11,0 | 20,4 | 42,5 | 0,03 | 39,8 | -1,3 | -10,4 | 473 | 18,7 | |
| 13 | 55,6 | 13,5 | 31,0 | 34,8 | 0,02 | 43,8 | -2,3 | -10,4 | 474 | 18,0 | |
| 14 | 56,5 | 13,1 | 30,4 | 34,0 | 0,02 | 43,2 | -0,3 | -9,8 | 478 | 16,0 | |
| 15 | 55,5 | 16,8 | 27,7 | 37,1 | 0,03 | 48,4 | 0,0 | -13,1 | 470 | 19,7 | |

La quantité d'absorption lumineuse due à la matière absorbante dans les différents exemples est respectivement d'environ 4% pour l'exemple 3, d'environ 30% pour l'exemple 4, d'environ 11% pour l'exemple 5, d'environ 10% pour l'exemple 6, d'environ 32% pour l'exemple 7, d'environ 18% pour l'exemple 8, d'environ 28% pour l'exemple 9, d'environ 22% pour l'exemple 10, d'environ 4% pour l'exemple 11, d'environ 9% pour l'exemple 12, d'environ 21% pour l'exemple 13, d'environ 20% pour l'exemple 14 et d'environ 17% pour l'exemple 15. Cette valeur d'absorption lumineuse due à la matière absorbante dans l'empilage n'a pas été modifiée par le traitement thermique à haute température qu'ont subi les empilages des exemples 3 à 10 et 13-14.

En variante de l'exemple 12, on a remplacé la matière absorbante NiCr, qui se trouve en alliage à 10% atomique de NiCr dans l'argent de la seconde couche fonctionnelle, par 10% atomique de Ti dans l'argent ou par 4% atomique de Pd dans l'argent, sans changer l'épaisseur de la couche fonctionnelle (IR2), et on a obtenu les mêmes propriétés optiques, y compris la teinte, que les valeurs données dans le tableau 2 pour l'exemple 12. L'exemple 12 et ses variantes se rapportent à des empilages non trempables. Lorsqu'il s'agit d'un empilage trempable, il faut choisir la matière absorbante de substitution parmi les matières absorbantes listées ci-dessus comme préférées pour la réalisation d'empilages trempables, à savoir les matières suivantes : Pd, Pt, Au, Ir, Rh, Ru, Os, Co, La, Ce, Pr, Nd et leurs alliages.

Les propriétés optiques et énergétiques des vitrages revêtus montés en vitrage double de la même manière que dans l'exemple 1, avec une feuille de verre clair de 6 mm et espacement de 15 mm remplis à 100% d'argon, sont données dans le tableau 3. Le vitrage est observé avec l'empilage placé en position 2 sur la feuille extérieure à l'intérieur du vitrage double, c'est-à-dire qu'on voit d'abord le verre portant le revêtement observé côté verre, puis la feuille de verre sans couche. Les vitrages doubles des exemples 9 et 10 assemblés avec les empilages trempés sont esthétiquement juxtaposables avec leurs homologues assemblés avec les mêmes empilages non-trempés, car $\Delta E^*$ est très faible.

Tableau 3.

| Ex. | TL(%) | RL(%) | AL(%) | FS(%) | S | U (ou k) (W/m$^2$K) | $L_{RV}^*$ | $a_{RV}^*$ | $b_{RV}^*$ | $\lambda_{d(RV)}$ (nm) | $P_{(RV)}$ (%) | $\Delta E^*$ |
|---|---|---|---|---|---|---|---|---|---|---|---|---|
| 3 | 43,7 | 45,5 | 10,7 | 27,7 | 1,58 | 1,1 | 73,4 | -2,4 | -2,7 | 480 | 4,2 | - |
| 4 | 38,1 | 16,2 | 45,7 | 21,2 | 1,80 | 1,1 | 47,4 | -1,8 | -7,4 | 474 | 12,3 | - |
| 5 | 60,6 | 14,6 | 24,7 | 34,5 | 1,76 | 1,1 | 45,3 | -3,1 | -8,1 | 476 | 14,6 | - |
| 6 | 61,7 | 14,4 | 23,9 | 37,0 | 1,67 | 1,1 | 45,0 | -2,5 | -9,9 | 475 | 17,1 | - |
| 7 | 38,6 | 16,0 | 45,4 | 53,0 | 1,82 | 1,1 | 47,1 | -2,5 | -6,5 | 476 | 11,5 | - |
| 8 | 54,7 | 14,2 | 31,1 | 31,3 | 1,75 | 1,1 | 44,8 | -2,0 | -10,8 | 474 | 18,2 | - |
| *9 AT* | *31,1* | *27,9* | *41,0* | *17,3* | *1,79* | *1,1* | *59,8* | *-1,6* | *-2,0* | *479* | *3,4* | 1,06 |
| 9 | 31,2 | 28,7 | 40,1 | 17,8 | 1,75 | 1,1 | 60,5 | -2,4 | -2,1 | 481 | 4,0 | |
| *10 AT* | *50,7* | *13,8* | *35,5* | *27,2* | *1,86* | *1,1* | *44,0* | *-1,2* | *-12,0* | *469* | *18,2* | 0,91 |
| 10 | 51,5 | 13,4 | 35,1 | 27,6 | 1,87 | 1,1 | 43,7 | -0,7 | -12,7 | 472 | 20,5 | |
| 11 | 53,2 | 34,9 | 11,8 | 28,6 | 1,50 | 1,1 | 65,9 | -3,1 | -5,2 | 478 | 7,8 | |
| 12 | 61,4 | 14,8 | 23,8 | 36,4 | 1,69 | 1,1 | 45,5 | -2,5 | -8,2 | 475 | 14,3 | |
| 13 | 50,0 | 15,9 | 34,1 | 29,4 | 1,70 | 1,0 | 47,2 | -3,1 | -9,0 | 475 | 15,8 | |
| 14 | 50,8 | 15,7 | 33,5 | 28,2 | 1,81 | 1,0 | 47,0 | -2,0 | -8,7 | 474 | 14,6 | |
| 15 | 49,8 | 19,3 | 30,9 | 29,2 | 1,71 | 1,1 | 51,4 | -1,1 | -11,7 | 473 | 16,9 | |

**Revendications**

1. Feuille de verre portant un empilage anti-solaire multicouche comprenant au moins une couche fonctionnelle comportant un matériau réfléchissant le rayonnement infrarouge à base d'argent et au moins deux revêtements diélectriques dont l'un est le premier revêtement diélectrique déposé directement sur la feuille de matière vitreuse et l'autre est externe par rapport à la ou aux couches fonctionnelles, chaque couche fonctionnelle étant entourée de revêtements diélectriques, le dit empilage, lorsqu'il est déposé sur une feuille de verre float clair sodo-calcique ordinaire de 6 mm d'épaisseur, présentant un facteur solaire FS inférieur à 45% et une transmission lumineuse TL inférieure à 70%,

   **caractérisée en ce qu'**une couche à base d'oxyde ou de sous-oxyde de zinc est disposée sous chaque couche à base d'argent et en contact direct avec elle, et **en ce que** l'empilage comprend une matière absorbante essentiellement métallique, à base d'au moins un des éléments suivants : Pd, Pt, Au, Ir, Rh, Ru, Os, Co, La, Ce, Pr, Nd, Si, Mo, Mn, V, Hf, et leurs alliages, disposée sur la couche fonctionnelle et en contact direct avec elle sous forme d'une couche distincte et **en ce que** le revêtement diélectrique externe inclut au moins une couche à base d'un oxyde mixte zinc-étain contenant au moins 20% d'étain.

**2.** Feuille de verre selon la revendication 1, **caractérisé en ce que** le revêtement diélectrique externe de l'empilage inclut une couche-barrière à la diffusion de l'oxygène de plus de 5 nm d'épaisseur choisie parmi les matériaux suivants: AlN, AlNxOy, $Si_3N_4$, SiOxNy, $SiO_2$, ZrN, SiC, SiOxCy, TaC, TiN, TiNxOy,TiC, CrC, DLC et leurs alliages, et des nitrures ou oxy-nitrures d'alliages tels que SiAlOxNy ou SiTixNy.

**3.** Feuille de verre selon l'une des revendications 1 ou 2, **caractérisé en ce que** la matière absorbante est constituée d'au moins un des éléments suivants : Pd, Pt, Au, Ir, Rh, Ru, Os, Co, La, Ce, Pr, Nd, Si, Mo, Mn, V, Hf, et leurs alliages.

**4.** Feuille de verre selon la revendication 3, **caractérisé en ce que** cette couche distincte de matière absorbante a une épaisseur physique comprise entre 0,3 et 10 nm, de préférence entre 0,4 et 5 nm.

**5.** Feuille de verre selon la revendication 4, **caractérisé en ce que** cette couche distincte de matière absorbante a une épaisseur physique comprise entre 0,8 et 3 nm.

**6.** Feuille de verre selon l'une des revendications 1 à 5, **caractérisé en ce que** la matière absorbante est choisie parmi au moins l'un des éléments suivants ; Pt, Pd, Co, Ir, Ru, Rh, Os, CoCr, et leurs alliages.

**7.** Feuille de verre selon la revendication 6, **caractérisé en ce que** la matière absorbante est du palladium.

**8.** Feuille de verre selon l'une des revendications 1 à 7, **caractérisé en ce que** 4 à 35%, de préférence 8 à 22%, de l'absorption lumineuse de l'empilage sont imputables à la matière absorbante.

**9.** Feuille de verre selon l'une des revendications 1 à 8, **caractérisé en ce que** le premier revêtement diélectrique et le revêtement diélectrique externe comprennent au moins une couche à base d'un oxyde mixte zinc-étain contenant au moins 20% d'étain.

**10.** Feuille de verre selon l'une des revendications 3 à 9, **caractérisé en ce qu'**il comprend dans l'ordre au moins la succession suivante de couches à partir de la feuille de matière vitreuse :

    a) un premier revêtement diélectrique,
    b) une couche fonctionnelle à base d'argent,
    c) une couche absorbante,
    d) de manière optionnelle, une ou deux couches de métal sacrificiel, éventuellement sous-oxydé, choisi parmi un ou plusieurs des matériaux suivants : Ti, Ni, Cr, Nb, Zn, Zr, Al, Ta et leurs alliages,
    e) un revêtement diélectrique externe.

**11.** Feuille de verre selon l'une des revendications 1 à 10, **caractérisé en ce qu'**il comprend au moins deux couches fonctionnelles séparées par au moins un revêtement diélectrique intermédiaire.

**12.** Feuille de verre selon la revendication 11, caractérisé en ce la matière absorbante est disposée sur et en contact direct sous forme d'une couche distincte avec la couche fonctionnelle la plus éloignée de la feuille de matière vitreuse et en ce que la teinte n'est pas significativement modifiée lorsqu'une matière absorbante est remplacée par une autre matière absorbante apportant le même niveau d'absorption.

**13.** Feuille de verre selon l'une des revendications 11 ou 12, **caractérisé en ce qu'**il comprend dans l'ordre au moins la succession suivante de couches à partir de la feuille de matière vitreuse :

    a) un premier revêtement diélectrique,
    b) une première couche fonctionnelle à base d'argent,
    c) une ou deux couches de métal sacrificiel, éventuellement sous-oxydé, choisi parmi un ou plusieurs des matériaux suivants : Ti, Ni, Cr, Nb, Zn, Zr, Al, Ta et leurs alliages,
    d) un revêtement diélectrique intermédiaire,
    e) une seconde couche fonctionnelle à base d'argent,
    f) une couche absorbante,
    g) de manière optionnelle, une ou deux couches de métal sacrificiel, éventuellement sous-oxydé, choisi parmi un ou plusieurs des matériaux suivants : Ti, Ni, Cr, Nb, Zn, Zr, Al, Ta et leurs alliages,
    h) un revêtement diélectrique externe.

**14.** Feuille de verre selon l'une des revendications 11 à 13, **caractérisé en ce qu'**il comprend dans l'ordre au moins la succession suivante de couches à partir de la feuille de matière vitreuse :

> a) un premier revêtement diélectrique contenant au moins une couche à base d'un oxyde mixte zinc-étain,
> b) une première couche fonctionnelle à base d'argent,
> c) une ou deux couches de métal sacrificiel, éventuellement sous-oxydé, choisi parmi un ou plusieurs des matériaux suivants : Ti, Ni, Cr, Nb, Zn, Zr, Al, Ta et leurs alliages,
> d) un revêtement diélectrique intermédiaire,
> e) une seconde couche fonctionnelle à base d'argent,
> f) une couche absorbante à base de palladium,
> g) de manière optionnelle, une ou deux couches de métal sacrificiel, éventuellement sous-oxydé, choisi parmi un ou plusieurs des matériaux suivants : Ti, Ni, Cr, Nb, Zn, Zr, Al, Ta et leurs alliages,
> h) revêtement diélectrique externe contenant au moins une couche à base d'un oxyde mixte zinc-étain.

**15.** Feuille de verre selon la revendication 14, caractérisé en ce tous les revêtements diélectriques comprennent une couche à base d'un oxyde mixte zinc-étain à environ 50% d'étain et de zinc, et une couche à base d'un oxyde mixte zinc-étain n'ayant pas plus d'environ 10% d'étain et au moins environ 90% de zinc, cette dernière couche étant chaque fois disposée plus près de la couche fonctionnelle qui suit que la couche d'oxyde mixte à environ 50% d'étain.

**16.** Feuille de verre selon l'une des revendications précédentes, **caractérisé en ce qu'**il se termine par une fine couche de protection à base de carbone de 1,5 à 10 nm d'épaisseur.

**17.** Feuille de verre selon l'une des revendications 1 à 16, **caractérisé en ce qu'**elle présente une teinte examinée en réflexion côté verre représentée par L* compris entre 30 et 55, de préférence entre 40 et 50, a* compris entre -4 et +3, de préférence entre -2,5 et +1,5, et b* compris entre -4 et -16, de préférence entre -6 et -13.

**18.** Feuille de verre selon l'une des revendications 1 à 17, **caractérisé en ce qu'**elle a subi un traitement thermique de trempe et/ou de bombage après dépôt de l'empilage multicouche.

**19.** Feuille de verre selon la revendication 18, **caractérisé en ce que** 4 à 35%, de préférence 8 à 22%, de l'absorption lumineuse de l'empilage après traitement thermique sont imputables à la matière absorbante.

**20.** Vitrage multiple comprenant une feuille de verre selon l'une des revendications 1 à 19.

**21.** Vitrage multiple selon la revendication 20, **caractérisé en ce qu'**il présente un facteur solaire FS compris entre 20 et 35%, de préférence entre 25 et 35%, avec une transmission lumineuse d'au moins 45%, de préférence d'au moins 50% et avantageusement d'au moins 55%.

**22.** Vitrage multiple selon l'une des revendications 19 à 20, **caractérisé en ce qu'**il présente une teinte en réflexion côté de la feuille de verre portant l'empilage, empilage disposé vers l'espace intérieur du vitrage multiple, représentée par L* compris entre 40 et 55, de préférence entre 45 et 52, a* compris entre 1,5 et -6, de préférence entre 0,5 et -4, et b* compris entre -3 et-15, de préférence entre -5 et -12.

**Patentansprüche**

**1.** Glasscheibe, welche einen mehrschichtigen Sonnenschutzstapel trägt, umfassend mindestens eine funktionelle Schicht, umfassend ein Infrarotstrahlen reflektierendes Material auf der Basis von Silber und mindestens zwei dielektrische Beschichtungen, wovon die eine die erste dielektrische Beschichtung ist, die direkt auf der Scheibe aus Glasmaterial abgeschieden ist, und die andere extern in Bezug auf die funktionelle Schicht oder funktionellen Schichten ist, wobei jede funktionelle Schicht von dielektrischen Beschichtungen umgeben ist, wobei der Stapel, wenn er auf einer gewöhnlichen klaren Float-Natronkalk-Glasscheibe mit einer Dicke von 6 mm abgeschieden ist, einen Solarfaktor FS von weniger als 45 % und eine Lichtdurchlässigkeit TL von weniger als 70 % aufweist, **dadurch gekennzeichnet, dass** eine Schicht auf der Basis von Zinkoxid oder -suboxid auf jeder Schicht auf der Basis von Silber und in direktem Kontakt mit dieser angeordnet ist, und dadurch, dass der Stapel ein im Wesentlichen metallisches absorbierendes Material auf der Basis mindestens eines der folgenden Elemente umfasst: Pd, Pt, Au, Ir, Rh, Ru, Os, Co, La, Ce, Pr, Nd, Si, Mo, Mn, V, Hf und ihrer Legierungen, das auf der funktionellen Schicht und in direktem Kontakt mit dieser in Form einer eigenen Schicht angeordnet ist, und dadurch, dass die externe dielektrische Beschichtung mindestens eine Schicht auf der Basis eines gemischten Zink-Zinn-Oxids aufweist, enthaltend mindestens 20 % Zinn.

2. Glasscheibe nach Anspruch 1,
**dadurch gekennzeichnet, dass** die externe dielektrische Beschichtung des Stapels eine Sperrschicht für die Sauerstoffdiffusion mit einer Dicke von mehr als 5 nm aufweist, ausgewählt aus den folgenden Materialien: AIN, AINxOy, $Si_3N_4$, SiOxNy, $SiO_2$, ZrN, SiC, SiOxCy, TaC, TiN, TiNxOy, TiC, CrC, DLC und ihren Mischungen, und Nitriden oder Oxynitriden von Legierungen, wie SiAIOxNy oder SiTixNy.

3. Glasscheibe nach einem der Ansprüche 1 oder 2,
**dadurch gekennzeichnet, dass** das absorbierende Material aus mindestens einem der folgenden Elemente besteht: Pd, Pt, Au, Ir, Rh, Ru, Os, Co, La, Ce, Pr, Nd, Si, Mo, Mn, V, Hf und ihren Legierungen.

4. Glasscheibe nach Anspruch 3,
**dadurch gekennzeichnet, dass** diese eigene Schicht aus absorbierendem Material eine physikalische Dicke zwischen 0,3 und 10 nm, vorzugsweise zwischen 0,4 und 5 nm aufweist.

5. Glasscheibe nach Anspruch 4,
**dadurch gekennzeichnet, dass** diese eigene Schicht aus absorbierendem Material eine physikalische Dicke zwischen 0,8 und 3 nm aufweist.

6. Glasscheibe nach einem der Ansprüche 1 bis 5,
**dadurch gekennzeichnet, dass** das absorbierende Material aus mindestens einem der folgenden Elemente ausgewählt ist: Pt, Pd, Co, Ir, Ru, Rh, Os, CoCr und ihren Legierungen.

7. Glasscheibe nach Anspruch 6,
**dadurch gekennzeichnet, dass** das absorbierende Material Palladium ist.

8. Glasscheibe nach einem der Ansprüche 1 bis 7,
**dadurch gekennzeichnet, dass** 4 bis 35 %, vorzugsweise 8 bis 22 %, der Lichtabsorption des Stapels dem absorbierenden Material zuzuschreiben sind.

9. Glasscheibe nach einem der Ansprüche 1 bis 8,
**dadurch gekennzeichnet, dass** die erste dielektrische Beschichtung und die externe dielektrische Beschichtung mindestens eine Schicht auf der Basis eines gemischten Zink-Zinn-Oxids umfassen, enthaltend mindestens 20 % Zinn.

10. Glasscheibe nach einem der Ansprüche 3 bis 9,
**dadurch gekennzeichnet, dass** diese in der Reihenfolge mindestens die folgende Abfolge von Schichten ab der Scheibe aus Glasmaterial umfasst:

a) eine erste dielektrische Beschichtung,
b) eine funktionelle Schicht auf der Basis von Silber,
c) eine absorbierende Schicht,
d) gegebenenfalls eine oder zwei Opfermetallschichten, gegebenenfalls suboxidiert, ausgewählt aus einem oder mehreren der folgenden Materialien: Ti, Ni, Cr, Nb, Zn, Zr, Al, Ta und ihren Mischungen,
e) eine externe dielektrische Schicht.

11. Glasscheibe nach einem der Ansprüche 1 bis 10,
**dadurch gekennzeichnet, dass** diese mindestens zwei funktionelle Schichten umfasst, die durch mindestens eine dazwischenliegende dielektrische Beschichtung getrennt sind.

12. Glasscheibe nach Anspruch 11,
**dadurch gekennzeichnet, dass** das absorbierende Material auf und in direktem Kontakt in der Form einer eigenen Schicht mit der funktionellen Schicht, die am weitesten von der Scheibe aus Glasmaterial entfernt ist, angeordnet ist, und dadurch, dass der Farbton nicht signifikant modifiziert wird, wenn ein absorbierendes Material durch ein anderes absorbierendes Material, das denselben Absorptionsgrad liefert, ersetzt wird.

**13.** Glasscheibe nach einem der Ansprüche 11 oder 12, **dadurch gekennzeichnet, dass** diese in der Reihenfolge mindestens die folgende Abfolge von Schichten ab der Scheibe aus Glasmaterial umfasst:

a) eine erste dielektrische Beschichtung,
b) eine erste funktionelle Schicht auf der Basis von Silber,
c) eine oder zwei Opfermetallschichten, gegebenenfalls suboxidiert, ausgewählt aus einem oder mehreren der folgenden Materialien: Ti, Ni, Cr, Nb, Zn, Zr, Al, Ta und ihren Mischungen,
d) eine dazwischenliegende dielektrische Beschichtung,
e) eine zweite funktionelle Schicht auf der Basis von Silber,
f) eine absorbierende Schicht,
g) gegebenenfalls eine oder zwei Opfermetallschichten, gegebenenfalls suboxidiert, ausgewählt aus einem oder mehreren der folgenden Materialien: Ti, Ni, Cr, Nb, Zn, Zr, Al, Ta und ihren Mischungen,
h) eine externe dielektrische Beschichtung.

**14.** Glasscheibe nach einem der Ansprüche 11 bis 13,
**dadurch gekennzeichnet, dass** diese in der Reihenfolge mindestens die folgende Abfolge von Schichten ab der Scheibe aus Glasmaterial umfasst:

a) eine erste dielektrische Beschichtung, enthaltend mindestens eine Schicht auf der Basis eines gemischten Zink-Zinn-Oxids,
b) eine erste funktionelle Schicht auf der Basis von Silber,
c) eine oder zwei Opfermetallschichten, gegebenenfalls suboxidiert, ausgewählt aus einem oder mehreren der folgenden Materialien: Ti, Ni, Cr, Nb, Zn, Zr, Al, Ta und ihren Mischungen,
d) eine dazwischenliegende dielektrische Beschichtung,
e) eine zweite funktionelle Schicht auf der Basis von Silber,
f) eine absorbierende Schicht auf der Basis von Palladium,
g) gegebenenfalls eine oder zwei Opfermetallschichten, gegebenenfalls suboxidiert, ausgewählt aus einem oder mehreren der folgenden Materialien: Ti, Ni, Cr, Nb, Zn, Zr, Al, Ta und ihren Mischungen,
h) eine externe dielektrische Beschichtung, enthaltend mindestens eine Schicht auf der Basis eines gemischten Zink-Zinn-Oxids.

**15.** Glasscheibe nach Anspruch 14,
**dadurch gekennzeichnet, dass** alle dielektrischen Beschichtungen umfassen: eine Schicht auf der Basis eines gemischten Zink-Zinn-Oxids mit ungefähr 50 % Zinn und Zink, und eine Schicht auf der Basis eines gemischten Zink-Zinn-Oxids, enthaltend nicht mehr als ungefähr 10 % Zinn und mindestens ungefähr 90 % Zink, wobei diese letztere Schicht jedes Mal am nächsten zu jener funktionellen Schicht angeordnet ist, die der gemischten Oxidschicht mit ungefähr 50 % Zinn folgt.

**16.** Glasscheibe nach einem der vorhergehenden Ansprüche, **dadurch gekennzeichnet, dass** diese durch eine feine Schutzschicht auf der Basis von Kohlenstoff mit einer Dicke von 1,5 bis 10 nm beendet wird.

**17.** Glasscheibe nach einem der Ansprüche 1 bis 16,
**dadurch gekennzeichnet, dass** diese einen Farbton aufweist, untersucht in der Reflexion auf der Glasseite, repräsentiert durch L* zwischen 30 und 55, vorzugsweise zwischen 40 und 50, a* zwischen -4 und +3, vorzugsweise zwischen -2,5 und +1,5, und b* zwischen -4 und -16, vorzugsweise zwischen -6 und -13.

**18.** Glasscheibe nach einem der Ansprüche 1 bis 17,
**dadurch gekennzeichnet, dass** diese einer thermischen Härtungs- und/oder Biegebehandlung nach dem Abscheiden des mehrschichtigen Stapels unterzogen wurde.

**19.** Glasscheibe nach Anspruch 18,
**dadurch gekennzeichnet, dass** 4 bis 35 %, vorzugsweise 8 bis 22 %, der Lichtabsorption des Stapels nach thermischer Behandlung dem absorbierenden Material zuschreiben sind.

**20.** Mehrfachverglasung, umfassend eine Glasscheibe nach einem der Ansprüche 1 bis 19.

**21.** Mehrfachverglasung nach Anspruch 20,
**dadurch gekennzeichnet, dass** diese einen Solarfaktor FS zwischen 20 und 35 %, vorzugsweise zwischen 25 und 35 %, mit einer Lichtdurchlässigkeit von mindestens 45 %, vorzugsweise mindestens 50 % und vorteilhaft mindestens 55 %, aufweist.

22. Mehrfachverglasung nach einem der Ansprüche 19 bis 20, **dadurch gekennzeichnet, dass** diese einen Farbton aufweist, in der Reflexion auf der Seite der Glasscheibe, die den Stapel trägt, wobei der Stapel zum Innenraum der Mehrfachverglasung angeordnet ist, repräsentiert durch L* zwischen 40 und 55, vorzugsweise zwischen 45 und 52, a* zwischen 1,5 und -6, vorzugsweise zwischen 0,5 und -4, und b* zwischen -3 und -15, vorzugsweise zwischen -5 und -12.

## Claims

1. Glass sheet carrying a multilayer solar-control stack, comprising at least one functional layer comprising a silver-based material that reflects infrared radiation and at least two dielectric coatings, one of which is the first dielectric coating, deposited directly on the sheet of vitreous material, and the other of which is external relative to the functional layer(s), each functional layer being surrounded by dielectric coatings, said stack, when it is deposited on a 6 mm-thick sheet of standard soda-lime clear float glass, having a solar factor SF of less than 45% and a light transmission LT of less than 70%,
**characterized in that** a layer based on zinc oxide or sub-oxide is arranged under each silver-based layer, in direct contact therewith, and **in that** the stack comprises an essentially metallic absorbent material, based on at least one of the following elements: Pd, Pt, Au, Ir, Rh, Ru, Os, Co, La, Ce, Pr, Nd, Si, Mo, Mn, V, Hf, and alloys thereof, arranged on the functional layer and in direct contact therewith in the form of a distinct layer, and **in that** the external dielectric coating includes at least one layer based on a mixed zinc-tin oxide containing at least 20% tin.

2. Glass sheet according to Claim 1, **characterized in that** the external dielectric coating of the stack includes a barrier layer to the diffusion of oxygen which is more than 5 nm thick, selected from the following materials: AIN, AINxOy, Si3N4, SiOxNy, SiO2, ZrN, SiC, SiOxCy, TaC, TiN, TiNxOy, TiC, CrC, DLC and alloys thereof, and nitrides or oxynitrides of alloys such as SiAlOxNy or SiTixNy.

3. Glass sheet according to either of Claims 1 and 2, **characterized in that** the absorbent material is formed of at least one of the following elements: Pd, Pt, Au, Ir, Rh, Ru, Os, Co, La, Ce, Pr, Nd, Si, Mo, Mn, V, Hf, and alloys thereof.

4. Glass sheet according to Claim 3, **characterized in that** this distinct layer of absorbent material has a physical thickness of between 0.3 and 10 nm, preferably between 0.4 and 5 nm.

5. Glass sheet according to Claim 4, **characterized in that** this distinct layer of absorbent material has a physical thickness of between 0.8 and 3 nm.

6. Glass sheet according to one of Claims 1 to 5, **characterized in that** the absorbent material is chosen from at least one of the following elements: Pt, Pd, Co, Ir, Ru, Rh, Os, CoCr, and alloys thereof.

7. Glass sheet according to Claim 6, **characterized in that** the absorbent material is palladium.

8. Glass sheet according to one of Claims 1 to 7, **characterized in that** 4 to 35%, preferably 8 to 22%, of the light absorption of the stack are attributable to the absorbent material.

9. Glass sheet according to one of Claims 1 to 8, **characterized in that** the first dielectric coating and the external dielectric coating comprise at least one layer based on a mixed zinc-tin oxide containing at least 20% tin.

10. Glass sheet according to one of Claims 3 to 9, **characterized in that** it comprises, in order, at least the following succession of layers, starting from the sheet of vitreous material:

    a) a first dielectric coating,
    b) a silver-based functional layer,
    c) an absorbent layer,
    d) optionally, one or two layers of sacrificial metal, optionally sub-oxidized, chosen from one or more of the following materials: Ti, Ni, Cr, Nb, Zn, Zr, Al, Ta and alloys thereof,
    e) an external dielectric coating.

11. Glass sheet according to one of Claims 1 to 10, **characterized in that** it comprises at least two functional layers separated by at least one intermediate dielectric coating.

12. Glass sheet according to Claim 11, **characterized in that** the absorbent material is arranged on, and in direct contact in the form of a distinct layer with, the functional layer furthest from the sheet of vitreous material, and **in that** the tint is not substantially modified when one absorbent material is replaced by another absorbent material providing the same level of absorption.

13. Glass sheet according to either of Claims 11 and 12, **characterized in that** it comprises, in order, at least the following succession of layers, starting from the sheet of vitreous material:

    a) a first dielectric coating,
    b) a first silver-based functional layer,
    c) one or two layers of sacrificial metal, optionally sub-oxidized, chosen from one or more of the following materials: Ti, Ni, Cr, Nb, Zn, Zr, Al, Ta and alloys thereof,
    d) an intermediate dielectric coating,
    e) a second silver-based functional layer,
    f) an absorbent layer,
    g) optionally, one or two layers of sacrificial metal, optionally sub-oxidized, chosen from one or more of the following materials: Ti, Ni, Cr, Nb, Zn, Zr, Al, Ta and alloys thereof,
    h) an external dielectric coating.

14. Glass sheet according to one of Claims 11 to 13, **characterized in that** it comprises, in order, at least the following succession of layers, starting from the sheet of vitreous material:

    a) a first dielectric coating containing at least one layer based on a mixed zinc-tin oxide,
    b) a first silver-based functional layer,
    c) one or two layers of sacrificial metal, optionally sub-oxidized, chosen from one or more of the following materials: Ti, Ni, Cr, Nb, Zn, Zr, Al, Ta and alloys thereof,
    d) an intermediate dielectric coating,
    e) a second silver-based functional layer,
    f) an absorbent palladium-based layer,
    g) optionally, one or two layers of sacrificial metal, optionally sub-oxidized, chosen from one or more of the following materials: Ti, Ni, Cr, Nb, Zn, Zr, Al, Ta and alloys thereof,
    h) an external dielectric coating containing at least one layer based on a mixed zinc-tin oxide.

15. Glass sheet according to Claim 14, **characterized in that** all the dielectric coatings comprise a layer based on a mixed zinc-tin oxide containing approximately 50% of tin and of zinc, and a layer based on a mixed zinc-tin oxide having no more than approximately 10% of tin and at least approximately 90% of zinc, the latter layer being each time arranged closer to the subsequent functional layer than the mixed oxide layer containing approximately 50% tin.

16. Glass sheet according to one of the preceding claims, **characterized in that** it is terminated by a thin, 1.5 to 10 nm thick, protective layer based on carbon.

17. Glass sheet according to one of Claims 1 to 16, **characterized in that** it has a tint, observed in reflection on the glass side, represented by L*, of between 30 and 55, preferably between 40 and 50, a* of between -4 and +3, preferably between -2.5 and +1.5, and b* of between -4 and -16, preferably between -6 and -13.

18. Glass sheet according to one of Claims 1 to 17, **characterized in that** it has undergone a heat treatment of tempering and/or bending type after deposition of the multilayer stack.

19. Glass sheet according to Claim 18, **characterized in that** 4 to 35%, preferably 8 to 22% of the light absorption of the stack after heat treatment is attributable to the absorbent material.

20. Multiple glazing unit comprising a glass sheet according to one of Claims 1 to 19.

21. Multiple glazing unit according to Claim 20, **characterized in that** it has a solar factor SF of between 20 and 35%, preferably between 25 and 35%, with a light transmission of at least 45%, preferably at least 50% and advantageously at least 55%.

**22.** Multiple glazing unit according to either of Claims 19 and 20, **characterized in that** it has a tint in reflection on the side of the glass sheet carrying the stack, with the stack being arranged towards the interior space of the multiple glazing unit, represented by $L^*$, of between 40 and 55, preferably between 45 and 52, $a^*$ of between 1.5 and -6, preferably between 0.5 and -4, and $b^*$ of between-3 and -15, preferably between -5 and -12.

**EP 1 888 476 B1**

## RÉFÉRENCES CITÉES DANS LA DESCRIPTION

**Documents brevets cités dans la description**

- WO 0248065 A1
- EP 543077 A1
- WO 03106363 A2

**Littérature non-brevet citée dans la description**

- Handbook of Chemistry and Physics. CRC Press, 1989, E389-E404